# EUROPÄISCHE PATENTSCHRIFT

(11) **EP 3 963 287 B1**
(45) Veröffentlichungstag und Bekanntmachung des Hinweises auf die Patenterteilung: **07.06.2023**
(21) Anmeldenummer: 20718239.5
(22) Anmeldetag: 02.04.2020
(51) Int. Cl.: G01C 21/32, G01C 21/36, G01C 21/00

(54) **VERFAHREN UND VORRICHTUNG ZUM ERSTELLEN EINER ERSTEN KARTE**
METHOD AND APPARATUS FOR CREATING A FIRST MAP
PROCÉDÉ ET DISPOSITIF POUR LA CRÉATION D'UNE PREMIÈRE CARTE

(30) Priorität: 03.05.2019 DE 102019206336
(43) Veröffentlichungstag der Anmeldung: 09.03.2022
(73) Patentinhaber: Robert Bosch GmbH, 70442 Stuttgart (DE)
(72) Erfinder: GAO, Ming, 31139 Hildesheim (DE); ABELING, Peter Christian, 30171 Hannover (DE); RASP, Philipp, 72827 Wannweil (DE)
(86) Internationale Anmeldenummer: PCT/EP2020/059356
(87) Internationale Veröffentlichungsnummer: WO 2020/224878

(56) Entgegenhaltungen:
- EP-A1- 0 932 134
- DE-A1-102013 208 521
- DE-A1-102015 225 472
- DE-A1-102017 210 798
- US-B1- 6 502 033
- US-B1- 6 687 611

## Beschreibung

Die vorliegende Erfindung betrifft unter anderem ein Verfahren zum Erstellen einer ersten Karte mit einem Schritt des Bereitstellens einer zweiten Karte, einem Schritt des Empfangens von Kartendaten, und einem Schritt des Erstellens der ersten Karte, ausgehend von den Kartendaten, mittels der zweiten Karte.

Aus dem Dokument DE 10 2015 225472 A1 sind ein Verfahren und Vorrichtungen zum Erstellen einer Karte bekannt, wobei wenigstens zwei Umgebungsdatensätze erfasst und darauf basierend zwei Teilkarten erstellt werden und die Karte basierend auf den wenigstens zwei Umgebungsdatensätzen und den wenigstens zwei Teilkarten erstellt wird.

Das Dokument DE 10 2013 208521 A1 offenbart ein Erstellen eines Straßenmodells basierend auf Trajektoriendaten und Perzeptionsdaten, wobei für die Trajektorie eine optimale Schätzung von Trajektorienpunkten erfolgen kann.

### Offenbarung der Erfindung

Das erfindungsgemäße Verfahren zum Erstellen einer ersten Karte gemäß Anspruch 1 umfasst einen Schritt des Bereitstellens einer zweiten Karte, wobei die zweite Karte wenigstens einen vorgegebenen Weg umfasst, einen Schritt des Empfangens von Kartendaten, wobei die Kartendaten wenigstens eine Trajektorie und wenigstens ein weiteres Objekt repräsentieren, von mindestens einem Fahrzeug, welches die wenigstens eine Trajektorie abfährt und zeitgleich das wenigstens eine weitere Objekt mittels einer Umfeldsensorik erfasst, wobei die wenigstens eine Trajektorie eine optimierte Trajektorie darstellt, welche vorab mittels eines SLAM-Verfahrens, ausgehend von einer Vielzahl von Trajektorien, ermittelt wird, wobei unter der Vielzahl von Trajektorien mehrere Trajektorien einer Vielzahl von Fahrten zu verstehen sind, wobei sich jede Trajektorie auf eine vergleichbare Fahrt, beispielsweise auf eine bestimmte Fahrspur eines Verkehrsweges entlang desselben Streckenabschnitts, bezieht, und einen Schritt des Erstellens der ersten Karte, ausgehend von der Kartendaten, wobei eine Ausrichtung, welche auf einer Überlagerung des wenigstens einen vorgegebenen Wegs und der wenigstens einen Trajektorie basiert, ausgeführt wird und anschließend eine Verschiebung des wenigstens einen weiteren Objekts, ausgehend von der Ausrichtung, ausgeführt wird.

Unter einer ersten und/oder zweiten Karte ist beispielsweise eine digitale Karte zu verstehen, welche in Form von (Karten-) Datenwerten auf einem Speichermedium vorliegt. Diese Karte ist beispielsweise derart ausgebildet, dass eine oder mehrere Kartenschichten umfasst werden, wobei eine Kartenschicht beispielsweise eine Karte aus der Vogelperspektive (Verlauf und Position von Straßen, Gebäuden,
Landschaftsmerkmalen, etc.) zeigt. Dies entspricht beispielsweise einer Karte eines Navigationssystems. Eine weitere Kartenschicht umfasst beispielsweise eine Radarkarte, wobei Umgebungsmerkmale, welche von der Radarkarte abgebildet werden, mit einer Radarsignatur hinterlegt sind. Eine weitere Kartenschicht umfasst beispielsweise eine Lidarkarte, wobei Umgebungsmerkmale, welche von der Lidarkarte abgebildet werden, mit einer Lidarpunktwolke und/oder -objekten hinterlegt sind. Eine weitere Kartenschicht umfasst beispielsweise eine Videokarte, wobei Umgebungsmerkmale, welche von der Videokarte abgebildet werden, mit von einem Videosensor erkennbaren Objekten hinterlegt sind.

In einer Ausführungsform ist zusätzlich oder alternativ unter einer ersten und/oder zweiten Karte beispielsweise eine Karte zu verstehen, welche dazu geeignet ist, ein Fahrzeug automatisiert zu betreiben. Unter einem automatisierten Betreiben eines Fahrzeugs ist zu verstehen, dass das Fahrzeug teil-, hoch- oder vollautomatisiert - entsprechend einem der SAE-Level 1 bis 5 - betrieben wird (siehe Norm SAE J3016). Dabei umfasst das Betreiben des Fahrzeugs mittels der Karte beispielsweise das Bestimmen einer Trajektorie für das Fahrzeug und/oder das Abfahren dieser Trajektorie mittels einer automatisierten Quer- und/oder Längssteuerung und/oder das Ausführen sicherheitsrelevanter Fahrfunktionen etc.

Unter einem Bereitstellen der zweiten Karte ist beispielsweise zu verstehen, dass diese zweite Karte in Form von Datenwerten von einem Speichermedium oder einer externen Quelle (herunter-) geladen wird, so dass diese zum Ausführen des Verfahrens verwendet werden kann.

Unter einem vorgegebenen Weg ist beispielsweise eine ausgezeichnete Linie innerhalb oder entlang einer von der zweiten Karte umfassten Fahrspur zu verstehen. In einer Ausführungsform umfasst die zweite Karte beispielsweise eine mehrspurige Straße, wobei jede Fahrspur einen eindeutigen Verlauf sowie eine eindeutige Ausdehnung (beispielsweise in Form einer konstanten und/oder variierenden Breite) aufweist. Dabei entspricht der vorgegebene Weg beispielsweise einer Linie welche in Richtung dieser Fahrspur in der Mitte verläuft (also einen gleichen bzw. vergleichbaren Abstand zum linken und rechten Rand der Fahrspur aufweist,). In einer Ausführungsform ist unter einem vorgegebenen Weg beispielsweise eine Verkettung von Punkten zu verstehen, welche an ausgezeichneten Orten entlang des Weges bzw. innerhalb oder außerhalb der Fahrspur ortsgenau vorgegeben sind. In einer Ausführungsform ist unter einem vorgegebenen Weg beispielsweise eine geometrische Linie zu verstehen, welche an ausgezeichneten Orten entlang des Weges innerhalb oder außerhalb der Fahrspur ortsgenau vorgegeben ist.

Unter Kartendaten sind Daten zu verstehen, welche wenigstens eine Trajektorie und wenigstens ein weiteres Objekt repräsentieren. Dabei werden diese Daten von mindestens einem Fahrzeug, welches diese Trajektorie abfährt und zeitgleich das wenigstens eine weitere Objekt mittels einer - von dem Fahrzeug umfassten - Umfeldsensorik erfasst hat, bereitgestellt.

In einer Ausführungsform fährt das Fahrzeug beispielsweise die Trajektorie ab, wobei diese Trajektorie zeitgleich mittels einer Lokalisierungseinrichtung - beispielsweise als GPS-Positionen in GNSS-Koordinaten - erfasst und gespeichert wird. Weiterhin umfasst das Fahrzeug mittels einer Umfeldsensorik seine Umgebung. Unter einer Umfeldsensorik ist wenigstens ein Video- und/oder wenigstens ein Radar- und/oder wenigstens ein Lidar- und/oder wenigstens ein Ultraschall- und/oder wenigstens ein weiterer Sensor zu verstehen, welcher dazu ausgebildet ist, die Umgebung des Fahrzeugs in Form von Umgebungsdatenwerten zu erfassen.

Unter einer Umgebung des Fahrzeugs ist beispielsweise wenigstens ein Bereich zu verstehen, welche mittels der Umfeldsensorik des Fahrzeugs erfasst werden kann. Unter einer Umgebung kann auch ein Straßenabschnitt und/oder größere Bereiche (Ortsteile, Regionen, etc.) zu verstehen sein. Unter dem wenigstens einen weiteren Objekt ist beispielsweise ein Bauwerk (Gebäude, Tunnel, Brücke, etc.) und/oder ein Verkehrszeichen (Ampelanlage, Schilder, etc.) und/oder eine Infrastruktureinrichtung (Leitplanke, Fahrbahnmarkierung, etc.) und/oder ein Landschaftsmerkmal (Berg, See, Fluss, Wald, etc.) und/oder weitere Umgebungsmerkmale zu verstehen.

Das wenigstens eine weitere Objekt wird dabei erfasst und mit einer Position, welche beispielsweise ausgehend von der Position des Fahrzeugs vektoriell, mittels einer Entfernung und/oder einer Richtung des wenigstens einen weiteren Objekts relativ zu dem Fahrzeug, bestimmt wird, in dem Fahrzeug als Kartendaten gespeichert.

Unter einem Empfangen der Kartendaten ist beispielsweise zu verstehen, dass diese Kartendaten mittels einer Sende- und/oder Empfangseinheit direkt von dem Fahrzeug, welches diese Kartendaten bereitstellt, oder von einer weiteren Recheneinheit, welche die Kartendaten vorab direkt oder indirekt von dem Fahrzeug empfangen hat, empfängt. In einer Ausführungsform werden die Kartendaten vorab empfangen und zum Ausführen des Verfahrens - beispielsweise von einem Speichermedium - geladen.

Das erfindungsgemäße Verfahren löst vorteilhafterweise die Aufgabe, die Zuverlässigkeit und Genauigkeit von Kartendaten zu verbessern. Dies ist insbesondere für das Nutzen der ersten Karte für das automatisierte Fahren von großer Bedeutung, da somit ein zuverlässigeres bzw. sichereres Betreiben eines Fahrzeugs, abhängig von dieser ersten Karte, gewährleistet werden kann. Dies ist gerade auch für die Akzeptanz des automatisierten Fahrens enorm wichtig ist, da somit die Gewährleistung der Sicherheit der Insassen und des Fahrzeugs weiter gesteigert werden kann. Das erfindungsgemäße Verfahren löst diese Aufgabe mittels der beanspruchten Merkmale.

Erfindungsgemäß stellt die wenigstens eine Trajektorie eine optimierte Trajektorie dar, welche vorab mittels eines SLAM-Verfahrens, ausgehend von einer Vielzahl von Trajektorien, ermittelt wird.

Unter einer Vielzahl von Trajektorien sind mehrere Trajektorien einer Vielzahl von Fahrten zu verstehen, wobei sich jede Trajektorie auf eine vergleichbare Fahrt, beispielsweise auf eine bestimmte Fahrspur eines Verkehrsweges entlang desselben Streckenabschnitts, bezieht. Diese einzelnen Trajektorien werden anschließend mittels eines SLAM-Verfahren ("Simultaneous Localization and Mapping") miteinander assoziiert und anschließend gemeinsam optimiert. Dies führt vorteilhafterweise dazu, dass die optimierte Trajektorie präziser ist, als eine einzelne Trajektorie. Beispielsweise können somit fehlerhafte Angaben einzelner Trajektorien (beispielsweise bezogen auf einzelne Positionskoordinatenentlang dieser Trajektorien) vermieden bzw. verringert werden.

Vorzugsweise umfassen die Kartendaten wenigstens zwei Trajektorien und umfasst die zweite Karte wenigstens zwei vorgegebene Wege, wobei die Ausrichtung auf einer Überlagerung der wenigstens zwei vorgegebenen Wege und der wenigstens zwei Trajektorien basiert, wobei insbesondere jeder vorgegebene Weg und jede Trajektorie jeweils einer Fahrspur eines Verkehrsweges zugeordnet ist.

Hierin zeigt sich der Vorteil, dass die Ausrichtung genauer bestimmt und somit die Qualität bzw. Genauigkeit der ersten Karte verbessert werden kann.

Die erfindungsgemäße Vorrichtung, insbesondere eine Recheneinheit, ist dazu eingerichtet, alle Schritte des Verfahrens gemäß einem der Verfahrensansprüche auszuführen.

In einer Ausführungsform umfasst die Vorrichtung eine Recheneinheit (Prozessor, Arbeitsspeicher, Festplatte) sowie eine geeignete Software (Computerprogramm) um das Verfahren gemäß einem der Verfahrensansprüche auszuführen. In einer Ausführungsform umfasst die Vorrichtung eine Sende- und/oder Empfangseinheit, welche dazu ausgebildet ist, (Karten-) Datenwerte - insbesondere mit einem Fahrzeug und/oder externen Server bzw. einer Cloud - auszutauschen. In einer weiteren Ausführungsform ist die Vorrichtung als Server bzw. Cloud (also einem Verbund von Servern bzw. Recheneinheiten) - ausgebildet.

Weiterhin wird ein Computerprogramm beansprucht, umfassend Befehle, die bei der Ausführung des Computerprogramms durch einen Computer diesen veranlassen, ein Verfahren gemäß einem der Verfahrensansprüche auszuführen.

Weiterhin wird ein maschinenlesbares Speichermedium, auf dem das Computerprogramm gespeichert ist, beansprucht.

Vorteilhafte Weiterbildungen der Erfindung sind in den Unteransprüchen angegeben und in der Beschreibung aufgeführt.

### Zeichnungen

Ausführungsbeispiele der Erfindung sind in den Zeichnungen dargestellt und werden in den nachfolgenden Beschreibungen näher erläutert. Es zeigen:
Figur 1 ein Ausführungsbeispiel des erfindungsgemäßen Verfahrens in Form eines Ablaufdiagramms; und
Figur 2 (Fig. 2a und 2b) ein Ausführungsbeispiels des erfindungsgemäßen Verfahrens.

### Ausführungsformen der Erfindung

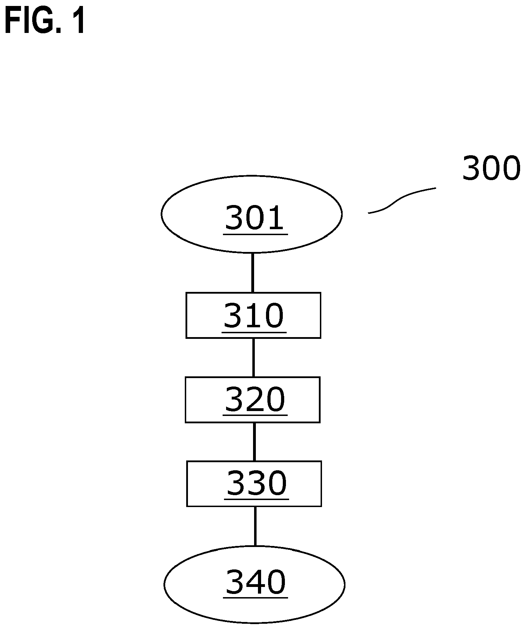

Figur 1 zeigt ein Ausführungsbeispiel des erfindungsgemäßen Verfahrens 300 in Form eines Ablaufdiagramms. Im Folgenden wird dabei unter anderem erläutert, wie beispielsweise das Erstellen 330 der ersten Karte, ausgehend von den Kartendaten, erfolgt.

In Schritt 301 beginnt das Verfahren 300.

In Schritt 310 wird eine zweite Karte bereitgestellt, wobei die zweite Karte wenigstens einen vorgegebenen Weg (100) umfasst.

In einer möglichen Ausführungsform handelt es sich bei der zweiten Karte beispielsweise um eine sogenannte Planungskarte, welche semantische Informationen über einen Straßenabschnitt (Konnektivitäten zwischen Fahrspuren, Klassifikation der Fahrspuren, etc.) enthält. Bei der ersten Karte handelt es sich beispielsweise um eine sogenannte Lokalisierungskarte, welche derart ausgebildet ist, dass ein Fahrzeug sich hochgenau mithilfe dieser Karte lokalisieren kann. Unter einem hochgenauen Lokalisieren ist beispielsweise eine Positionsbestimmung in GNSS-Koordinaten zu verstehen, welche bis auf wenige Zentimeter (maximal +/- 10cm) genau ist. Dies hat beispielsweise den Vorteil, dass - wenn die erste und die zweite Karte nach Ausführen des Verfahrens 300 zueinander ausgerichtet sind - es mithilfe beider Karten zeitgleich möglich ist, sich für ein (automatisierten) Fahrzeug zu lokalisieren und die Position innerhalb der Planungskarte zu bestimmen.

In Schritt 320 werden Kartendaten empfangen, wobei die Kartendaten wenigstens eine Trajektorie (200) und wenigstens ein weiteres Objekt repräsentieren.

Damit die erste Karte erstellt werden kann, wird hierfür wenigstens eine Trajektorie (200) benötigt, welche dazu - beispielsweise von einem Fahrzeug - empfangen wird. In einer möglichen Ausführungsform werden beispielsweise eine Vielzahl von Trajektorien (200) empfangen, wobei diese Vielzahl von Trajektorien (200) beispielsweise mittels einer Fahrzeugflotte abgefahren, gespeichert und - direkt oder indirekt - an die erfindungsgemäße Vorrichtung zum Ausführen des erfindungsgemäßen Verfahrens 300 übertragen werden. Anschließend wird ausgehend von der Vielzahl von Trajektorien (200), mittels insbesondere einem SLAM-Verfahren eine Optimierung der Vielzahl von Trajektorien (200) ausgeführt, welche dazu führt, dass eine optimierte Trajektorie erstellt wird. In einer möglichen Ausführungsform wird beispielsweise eine optimierte Trajektorie pro Fahrspur eines Verkehrsweges erstellt.

In Schritt 330 wird die erste Karte, ausgehend von den Kartendaten, erstellt. Dabei wird eine Ausrichtung, welche auf einer Überlagerung des wenigstens einen vorgegebenen Wegs (100) und der wenigstens einen Trajektorie (200) basiert, ausgeführt. Anschließend wird eine Verschiebung des wenigstens einen weiteren Objekts, ausgehend von der Ausrichtung, ausgeführt. Darunter ist beispielsweise eine Anpassung der Koordinaten des wenigstens einen weiteren Objekts mittels Vektoraddition zu verstehen.

Die Ausrichtung und die Verschiebung dienen letztendlich dazu, die erste Karte derart zu erstellen, dass diese an der zweiten Karte ausgerichtet wird. Diese Ausrichtung wird beispielsweise deshalb vorgenommen, weil die Inhalte der ersten und der zweiten Karte kombiniert werden sollen. In einer weiteren Ausführungsform erfolgt das Ausrichten deshalb, weil dadurch eventuell vorhandene fehlerhafte Teildatensätze der Kartendaten korrigiert werden können.

In Schritt 340 endet das Verfahren 300.

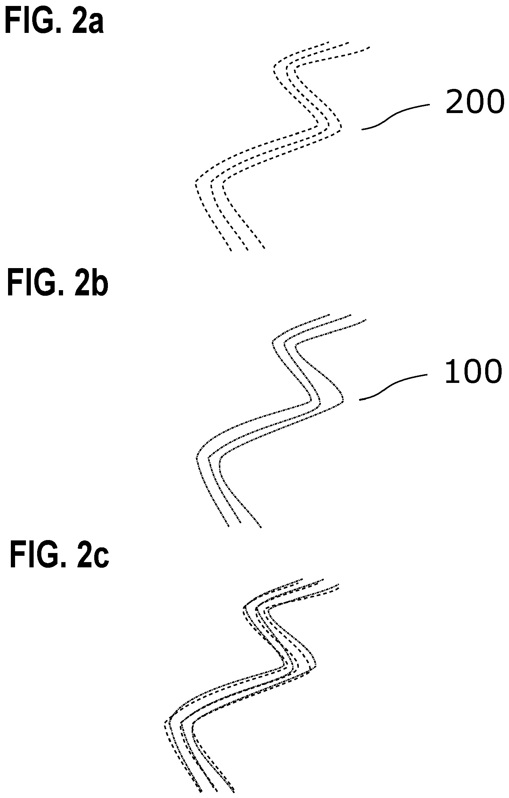

Figur 2 zeigt ein Beispiel der Ausrichtung der wenigstens einen (hier beispielhaft drei) Trajektorie (200) [Fig. 2a] an dem wenigstens einen (hier ebenfalls beispielshaft drei) vorgegebenen Weges (100) [Fig. 2b]. Dies geschieht beispielsweise mittels eines geeigneten Algorithmus bzw. einer geeigneten Software (beispielsweise basierend auf mathematischen Optimierungsverfahren), welcher die wenigstens eine Trajektorie (200) optimal an dem wenigstens einen vorgegebenen Weg (100) ausrichtet [Fig. 2c]. Diese Ausrichtung ist beispielsweise eine Annäherung, da die wenigstens eine Trajektorie (200) und der wenigstens eine vorgegebene Weg (100) nicht exakt identisch sind bzw. keinen exakt identischen Verlauf haben. Ausgehend von der Ausrichtung kann nun die Verschiebung, also beispielsweise das Anpassen der ersten Karte und der zweiten Karte zueinander, erfolgen. Im Folgenden können nun beispielsweise beide Karten gemeinsam verwendet werden.

## Patentansprüche

1. Verfahren (300) zum Erstellen einer ersten Karte, umfassend:
- Bereitstellen (310) einer zweiten Karte, wobei die zweite Karte wenigstens einen vorgegebenen Weg (100) umfasst;
- Empfangen (320) von Kartendaten, wobei die Kartendaten wenigstens eine Trajektorie (200) und wenigstens ein weiteres Objekt repräsentieren, von mindestens einem Fahrzeug, welches die wenigstens eine Trajektorie (200) abfährt und zeitgleich das wenigstens eine weitere Objekt mittels einer Umfeldsensorik erfasst, wobei die wenigstens eine Trajektorie (200) eine optimierte Trajektorie darstellt, welche vorab mittels eines SLAM-Verfahrens, ausgehend von einer Vielzahl von Trajektorien (200), ermittelt wird, wobei unter der Vielzahl von Trajektorien mehrere Trajektorien einer Vielzahl von Fahrten zu verstehen sind, wobei sich jede Trajektorie auf eine vergleichbare Fahrt, beispielsweise auf eine bestimmte Fahrspur eines Verkehrsweges entlang desselben Streckenabschnitts, bezieht; und
- Erstellen (330) der ersten Karte, ausgehend von den Kartendaten, wobei eine Ausrichtung, welche auf einer Überlagerung des wenigstens einen vorgegebenen Wegs (100) und der wenigstens einen Trajektorie (200) basiert, ausgeführt wird und anschließend eine Verschiebung des wenigstens einen weiteren Objekts, ausgehend von der Ausrichtung, ausgeführt wird.

2. Verfahren (300) nach Anspruch 1, **dadurch gekennzeichnet, dass** die Kartendaten wenigstens zwei Trajektorien (200) umfassen und die zweite Karte wenigstens zwei vorgegebene (100) Wege umfasst, wobei die Ausrichtung auf einer Überlagerung der wenigstens zwei vorgegebenen Wege (100) und der wenigstens zwei Trajektorien (200) basiert, wobei insbesondere jeder vorgegebene Weg (100) und jede Trajektorie (200) jeweils einer Fahrspur eines Verkehrsweges zugeordnet ist.

3. Vorrichtung, insbesondere eine Recheneinheit, die eingerichtet ist, alle Schritte des Verfahrens (300) gemäß einem der Ansprüche 1 bis 2 auszuführen.

4. Computerprogramm, umfassend Befehle, die bei der Ausführung des Computerprogramms durch einen Computer diesen veranlassen, ein Verfahren (300) gemäß einem der Ansprüche 1 bis 2 auszuführen.

5. Maschinenlesbares Speichermedium, auf dem das Computerprogramm nach Anspruch 4 gespeichert ist.

## Claims

1. Method (300) for creating a first map, comprising:
- providing (310) a second map, wherein the second map comprises at least one predefined route (100);
- receiving (320) map data, the map data representing at least one trajectory (200) and at least one further object, from at least one vehicle which drives along the at least one trajectory (200) and, at the same time, captures the at least one further object by means of an environmental sensor system, wherein the at least one trajectory (200) represents an optimized trajectory which is determined in advance starting from a multiplicity of trajectories (200) using a SLAM method, wherein the multiplicity of trajectories can be understood as meaning a plurality of trajectories of a multiplicity of journeys, wherein each trajectory relates to a comparable journey, for example in a certain lane of a traffic route along the same route section; and
- creating (330) the first map starting from the map data, wherein an alignment which is based on a superimposition of the at least one predefined route (100) and the at least one trajectory (200) is performed and the at least one further object is then shifted on the basis of the alignment.

2. Method (300) according to Claim 1, **characterized in that** the map data comprise at least two trajectories (200) and the second map comprises at least two predefined routes (100), wherein the alignment is based on a superimposition of the at least two predefined routes (100) and the at least two trajectories (200), wherein, in particular, each predefined route (100) and each trajectory (200) are each assigned to a lane of a traffic route.

3. Apparatus, in particular a computing unit, which is configured to carry out all steps of the method (300) according to one of Claims 1 to 2.

4. Computer program comprising instructions which, when the computer program is executed by a computer, cause the latter to carry out a method (300) according to one of Claims 1 to 2.

5. Machine-readable storage medium on which the computer program according to Claim 4 is stored.

## Revendications

1. Procédé (300) permettant de créer une première carte, comprenant les étapes consistant à :
- fournir (310) une deuxième carte, la deuxième carte comprenant au moins un chemin prédéfini (100) ;
- recevoir (320) des données de carte, les données de carte représentant au moins une trajectoire (200) et au moins un autre objet, provenant d'au moins un véhicule qui parcourt ladite au moins une trajectoire (200) et détecte en même temps ledit au moins un autre objet au moyen d'un système de capteurs d'environnement, dans lequel ladite au moins une trajectoire (200) représente une trajectoire optimisée qui est établie au préalable au moyen d'un procédé SLAM en partant d'une pluralité de trajectoires (200), dans lequel on entend par la pluralité de trajectoires plusieurs trajectoires d'une pluralité de déplacements, dans lequel chaque trajectoire fait référence à un déplacement comparable, par exemple à une voie de circulation déterminée d'une route le long de la même section de trajet ; et
- créer (330) la première carte en partant des données de carte, dans lequel un alignement qui est basé sur une superposition du au moins un chemin prédéfini (100) et de ladite au moins une trajectoire (200) est effectué, et ensuite, un décalage du au moins un autre objet est effectué en partant de l'alignement.

2. Procédé (300) selon la revendication 1, **caractérisé en ce que** les données de carte comprennent au moins deux trajectoires (200), et la deuxième carte comprend au moins deux chemins prédéfinis (100), dans lequel l'alignement est basé sur une superposition des au moins deux chemins prédéfinis (100) et des au moins deux trajectoires (200), dans lequel en particulier chaque chemin prédéfini (100) et chaque trajectoire (200) est associé(e) respectivement à une voie de circulation d'une route.

3. Dispositif, en particulier unité de calcul, qui est conçu pour exécuter toutes les étapes du procédé (300) selon l'une quelconque des revendications 1 à 2.

4. Programme informatique, comprenant des instructions qui, lorsque le programme informatique est exécuté par un ordinateur, font que celui-ci exécute un procédé (300) selon l'une quelconque des revendications 1 à 2.

5. Support de stockage lisible par machine, sur lequel est stocké le programme informatique selon la revendication 4.
